# EUROPEAN PATENT APPLICATION

(11) **EP 3 211 514 A1**
(43) Date of publication of application: **30.08.2017**
(21) Application number: 16861098.8
(22) Date of filing: 21.01.2016
(51) Int. Cl.: G06F 3/048

(54) **TOUCH SIGNAL-BASED MOBILE TERMINAL OPERATION METHOD, SYSTEM AND MOBILE TERMINAL**

(30) Priority: 09.11.2015 CN 201510755349
(71) Applicant: Shenzhen Goodix Technology Co., Ltd., Futian Freetrade Zone Shenzhen Guangdong 518000 (CN)
(72) Inventor: YANG, Wangwang, Shenzhen Guangdong 518000 (CN); DENG, Gengchun, Shenzhen Guangdong 518000 (CN)
(74) Representative: Herrero & Asociados, S.L.
(86) International application number: PCT/CN2016/071682
(87) International publication number: WO 2017/080110

(57) **Abstract**

The present invention discloses a method, a system for implementing an operation of a mobile terminal according to a touching signal and a mobile terminal, and the method includes steps of: receiving, by a fingerprint detecting device of the mobile terminal, a touching signal and detecting a pressure level of the touching signal; and executing, by the mobile terminal, a corresponding operation according to the pressure level of the touching signal. The method and system provided by the present invention can provide a plurality of manners of detecting the touching signal through the fingerprint detecting device.

## Description

### TECHNICAL FIELD

The present invention relates to the field of touching control technologies, and in particular, to a method, a system for implementing an operation of a mobile terminal according to a touching signal and a mobile terminal.

### BACKGROUND

As a handheld electronic device (such as a mobile phone) develops in the direction of light weight and thinness, more and more mobile phones no longer use a mechanical key. A capacitive touch key is used to replace functions of the mechanical key and detects basic functions of a single click, a double click, a long press, and the like. The function principle of the capacitive touch key is: when a hand touches in a key area, a key detecting capacitance changes, which can determine whether a finger touches the key. At present, most of touch key applications only determine pressing or left of the finger, for example, a state of the finger left the key is defined as a state 0, and a state of the finger pressing the key is defined as a state 1. When the finger gently touches the key area, the state changes from 0 to 1, which determines that a key signal is generated; when the finger leaves the key area, and the state changes from 1 to 0, which determines that the finger is left.

The foregoing manner of detecting tactile sense by the capacitive touch key is too simple for a mobile terminal and reduces user experience, and a key application method only using two states has the following problems: firstly, it is easily to be false triggered, and as long as the touch key is touched, the key signal is generated, it is easy to cause false triggering; secondly, only the tactile sense can be detected, tactile pressure cannot be detected; and thirdly, there is no vibration feedback for pressing similar to the mechanical key, thus pressing experience is poor.

### SUMMARY

The main objective of the present invention is to provide a method, a system for implementing an operation of a mobile terminal according to a touching signal and a mobile terminal, and to solve a problem that a tactile detecting manner of the mobile terminal is single and unable to detect a tactile pressure.

In order to achieve the foregoing objective, according to a first aspect, the present invention provides a method for implementing an operation of a mobile terminal according to a touching signal, including:
receiving, by a fingerprint detecting device of the mobile terminal, a touching signal and detecting a pressure level of the touching signal; and
executing, by the mobile terminal, a corresponding operation according to the pressure level of the touching signal.

Further, the detecting a pressure level of the touching signal includes:
detecting, by the fingerprint detecting device, the pressure level of the touching signal through a built-in or an external pressure detecting device, where the pressure detecting device includes a capacitive sensor, an optical sensor, and/or a pressure-sensitive element.

Further, the detecting a pressure level of the touching signal includes: detecting, by the fingerprint detecting device, the pressure level of the touching signal through fingerprint data outputted from the fingerprint detecting device.

Further, the corresponding operation includes a mobile terminal unlocking operation, a fingerprint scanning operation, a fingerprint matching operation, a wake-up operation and/or a menu selection operation.

Further, the method further includes:
simultaneously with, before, or after the executing a corresponding operation by the mobile terminal according to the pressure level of the touching signal, outputting feedback corresponding to the touching signal by driving a feedback device of the mobile terminal.

Further, the feedback corresponding to the touching signal includes tactile feedback, auditory feedback and/or visual feedback of the mobile terminal.

Further, the tactile feedback includes a motor vibration.

Further, a feedback intensity of the feedback corresponding to the touching signal is positively related to the pressure level of the touching signal.

The present invention also provides a system for implementing an operation of a mobile terminal according to a touching signal, including:
a fingerprint detecting device, configured to receive a touching signal and detect a pressure level of the touching signal; and
an executing module, configured to execute a corresponding operation according to the pressure level of the touching signal.

Further, the fingerprint detecting device is further configured to detect the pressure level of the touching signal through a built-in or an external pressure detecting device, and the pressure detecting device includes a capacitive sensor, an optical sensor, and/or a pressure-sensitive element.

Further, the fingerprint detecting device is further configured to detect the pressure level of the touching signal through fingerprint data outputted from the fingerprint detecting device.

Further, the corresponding operation includes a mobile terminal unlocking operation, a fingerprint scanning operation, a fingerprint matching operation, a wake-up operation and/or a menu selection operation.

Further, the executing module is further configured to:
output feedback corresponding to the touching signal by driving a feedback device of the mobile terminal.

Further, the feedback corresponding to the touching signal includes tactile feedback, auditory feedback and/or visual feedback of the mobile terminal.

Further, the tactile feedback includes a motor vibration.

Further, a feedback intensity of the feedback corresponding to the touching signal is positively related to the pressure level of the touching signal.

The present invention also provides a mobile terminal, including a system for implementing an operation of the mobile terminal, and the system including:

The present invention also provides a system for implementing an operation of a mobile terminal according to a touching signal, including:
a fingerprint detecting device, configured to receive a touching signal and detect a pressure level of the touching signal; and
an executing module, configured to execute a corresponding operation according to the pressure level of the touching signal.

Further, the fingerprint detecting device is further configured to detect the pressure level of the touching signal through a built-in or an external pressure detecting device, and the pressure detecting device includes a capacitive sensor, an optical sensor, and/or a pressure-sensitive element.

Further, the fingerprint detecting device is further configured to detect the pressure level of the touching signal through fingerprint data outputted from the fingerprint detecting device.

Further, the corresponding operation includes a mobile terminal unlocking operation, a fingerprint scanning operation, a fingerprint matching operation, a wake-up operation and/or a menu selection operation.

Further, the executing module is further configured to:
output feedback corresponding to the touching signal by driving a feedback device of the mobile terminal.

Further, the feedback corresponding to the touching signal includes tactile feedback, auditory feedback and/or visual feedback of the mobile terminal.

Further, the tactile feedback includes a motor vibration.

Further, a feedback intensity of the feedback corresponding to the touching signal is positively related to the pressure level of the touching signal.

The fingerprint detecting device provided by an embodiment of the present invention receives the touching signal through a built-in or an external pressure detecting device and detects a touching pressure; the user only needs to place his or her finger on an area of the fingerprint detecting device, so that the detecting manner may be diversified. Further, the mobile terminal performs different operations of the mobile terminal according to different pressure levels of the touching signal, and comparing with a sense touching in the prior art, the present invention distinguishes a touching intensity of a human, enriches functions of the touch key, and improves the user experience.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic diagram of an application scenario for implementing various embodiments of the present invention;
FIG. 2 is a flowchart of a first embodiment of a method for implementing an operation of a mobile terminal according to a touching signal of the present invention;
FIG. 3 is a flowchart of an application example of the first embodiment of a method for implementing an operation of a mobile terminal according to a touching signal of the present invention;
FIG. 4 is a flowchart of a second embodiment of a method for implementing an operation of a mobile terminal according to a touching signal of the present invention;
FIG. 5 is a block schematic diagram of a third embodiment of a system for implementing an operation of a mobile terminal according to a touching signal of the present invention; and
FIG. 6 is a block schematic diagram of a fourth embodiment of a system for implementing an operation of a mobile terminal according to a touching signal of the present invention.

### DEATAIL DESCRIPTION

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The mobile terminal implementing various embodiments of the present invention will now be described with reference to the accompanying drawings. In the following description, suffixes such as a "module", a "component", or a "unit" used to denote elements are merely facilitating the description of the present invention and these suffixes per se do not have any specific meaning. Therefore, a "module" and a "component" may be used in combination.

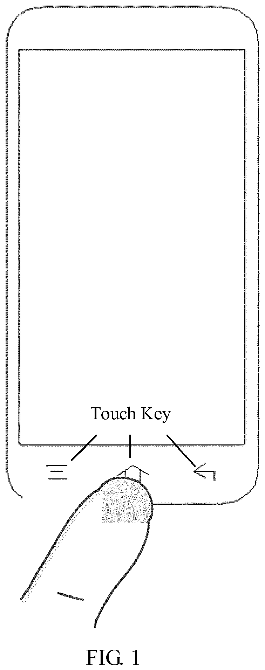

As shown in FIG. 1, as for a handheld electronic device (or a mobile terminal), a capacitive touching screen is used at present, the capacitive touching screen includes a plurality of capacitive touching control keys. A finger touches the capacitive touching control key for implementing a related operation, which is easy to operate. The mobile terminal may be implemented in various forms. For example, the mobile terminal described in the present invention may include a mobile terminal such as a mobile phone, a smart phone, a notebook computer, a digital broadcast receiver, a PDA (personal digital assistant), a PAD (tablet computer), a PMP (portable multimedia player), a navigation device and a fixed terminal such as a digital TV, a desktop computer. However, it will be understood by a person of skill in the art that a configuration according to embodiments of the present invention may also be applied to a fixed type terminal, in addition to an element specifically for a mobile objective.

### Embodiment 1

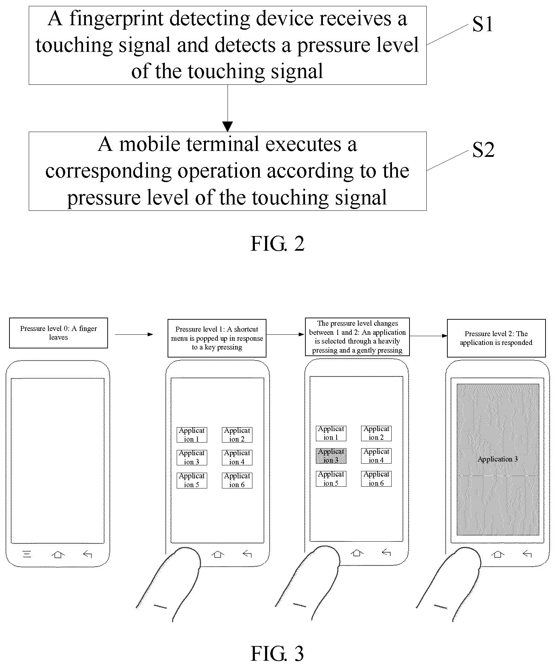

Based on the foregoing application scenario, as shown in FIG. 2, Embodiment 1 of the present invention provides a method for implementing an operation of a mobile terminal according to a touching signal. The method includes steps of:

S1, A fingerprint detecting device receives a touching signal and detects a pressure level of the touching signal.

In step S1, the fingerprint detecting device receives a touching signal through a built-in or an external pressure detecting device such as a capacitive sensor, an optical sensor and/or a pressure-sensitive element; the pressure detecting device such as the optical sensor or the pressure-sensitive element may be electrically connected to the fingerprint detecting device or merely be arranged on a periphery area of the fingerprint detecting device. A user only needs to press a finger against an area of the fingerprint detecting device to send a touching signal, and the fingerprint detecting device may obtain said touching signal.

The fingerprint detecting device further detects the pressure level of the touching signal. In a capacitive touching detecting manner, a touching pressure may be detected according to a change of a finger pressing area; in an optical touching detecting manner, the touching pressure may be detected according to a change of a light absorption intensity by a hand, and a pressure detecting method of the pressure-sensitive element type detects a change of the touching pressure according to a change of a resistance value of the pressure-sensitive element when the hand touches a key. In addition, the change of the touching pressure may also be determined according to a change of a fingerprint image.

Takes detecting the touching pressure by the fingerprint detecting device per se as an example, since touching pressure of a body part (such as the finger) is different, and a contact degree between the body part and the fingerprint detecting device is different, and accordingly collected fingerprint data would change. A main manifestation is that: when the touching pressure of the body part increases, texture ridges (such as fingerprint ridges) are close to each other by squeezing deformation, and the greater the touching pressure, the more the deformation. Therefore, the fingerprint detecting device may collect information data of a fingerprint texture of a touched body part through a plurality of sensing units, and then calculate a ridge deformation degree of the fingerprint texture of the body part according to collected texture information data, and quantify the touching pressure of the body part according to the ridge deformation degree (the ridge deformation degree is positively related to the touching pressure). The fingerprint detecting device may also detect a pressure level of the touching signal through a contact area between the finger and the fingerprint detecting device (the greater the touching pressure, the larger the contact area between the finger and the fingerprint detecting device) and fingerprint data outputted from the fingerprint detecting device (the greater the touching pressure, the greater the amount of the data outputted through fingerprint detection).

When the fingerprint detecting device detects the touching pressure through a built-in or the external optical sensor, the fingerprint detecting device receives a reflected light reflected from blood in the body part, converts a reflected light signal into an electrical signal, performs an analysis processing on the electrical signal, and quantifies the touching pressure generated by the body part according to an intensity of the electrical signal (the touching pressure is positively related to the intensity of the reflected light).

S2. The mobile terminal executes a corresponding operation according to the pressure level of the touching signal.

Before executing the step S2, the pressure levels of the touching signals are preset in the fingerprint detecting device, so as to distinguish a process from a non-touching to a gently pressing, and then to a heavily pressing by the finger. For example, the pressure levels of the touching signals includes three levels: level 0: when the finger initially contacts with the area of the fingerprint detecting device, pressure of a detected touching signal is less than or equal to a preset first threshold value; level 1: when the finger maintains touching, the pressure of the touching signal is greater than the first threshold value, and less than or equal to a preset second threshold; and level 2: when the finger heavily presses the area of the fingerprint detecting device, the pressure of the touching signal is greater than the second threshold value. Next, the mobile terminal are set to perform operations corresponding to different pressure levels of the touching pressure, and different operations can be performed according to a change of pressing by the finger from the gently pressing to the heavily pressing. Many kinds of corresponding operations can be set, such as a unlocking operation, a wake-up operation and/or a menu selection operation, etc.. For example, when the pressure level of the touching signal is 0, the mobile terminal does not perform any operation; when the pressure level of the touching signal is 1, the corresponding operation is waking up the mobile terminal; when the pressure level of the touching signal is 2, a fingerprint matching operation and a fingerprint unlocking operation are performed, or a menu selection operation is directly performed. The operations of the mobile terminal such as controlling of a game, zooming of a map, controlling of a player volume may also be set as the operations corresponding to the different pressure levels of the touching signal.

As shown in FIG. 3, taking a corresponding operation as the menu selection as an example, when the pressure level is 0, it is determined that the finger leaves, the mobile terminal does not perform any operation; when the pressure level is 1, a shortcut menu is popped up; when the pressure level changes between 1 and 2 (that is, when the finger changes between the gently pressing and the heavily pressing), an application is selected; the pressure level 2: the selected application is responded after selecting the application.

The fingerprint detecting device of Embodiment 1 of the present invention receives the touching signal through the built-in or the peripheral device and detects the pressure level of the touching signal, the user only needs to place his or her finger on the area of the fingerprint detecting device, so that the detecting manner may be diversified. Further, the mobile terminal performs different operations of the mobile terminal according to the different pressure levels of the touching signal, and comparing with the prior art which merely senses a touching, the present invention distinguishes a touching intensity of a human, enriches functions of a touching key, and improves the user experience.

### Embodiment 2

On the basis of Embodiment 1, in Embodiment 2 of the present invention, further includes, simultaneously with, before or after executing a step S2, a step of:

S3. A mobile terminal outputs feedback corresponding to the touching signal by driving a feedback device.

A feedback manner is preset in the mobile terminal corresponding to the different pressure levels of the touching signal. The feedback manner may be a tactile feedback, an auditory feedback and/or a visual feedback. The tactile feedback may be performed by driving a motor to vibrate, the auditory feedback may be performed by driving a speaker to generate a preset prompt tone, and the visual feedback may be performed by driving a display device to display a preset picture or image. Takes the motor vibration as an example, when the pressure level of the touching signal changes from level 0to level 1: a system detects a touching of the finger but does not respond a key pressing action, and the motor does not vibrate; level 1to level 2: the system responds the key pressing action and controls a tactile feedback motor generating vibration feedback; and level 2: the system responds the key pressing and drives the motor to generate a feedback vibration according to the pressure, and the vibration continues for a preset time. The foregoing tactile feedback intensity is positively related to the pressure level of the touching signal, and the feedback intensity may be a separate setting of amplitude, frequency or duration of a feedback signal, or a combination setting thereof. As for the tactile feedback, the pressure level may be reflected through a vibration intensity of a vibration motor, and the greater the pressure level, the larger a vibration amplitude, the higher a vibration frequency or the longer a vibration duration. As for the visual feedback, different feedback interfaces may be displayed through a display according to the pressure level, the feedback intensity of the display is positively related to the pressure level, such as the pressure level is positively related to a screen background brightness or a background color saturation; the greater the pressure level, the brighter the background or the deeper the color of the screen background. When the pressure level reaches a certain threshold, the screen prompts by a dynamic water ripple, and the greater the pressure level, the larger a dynamic water ripple or the more the number of turns thereof A pressure energy bar may also be displayed on the screen when the pressure level reaches a certain threshold, and the pressure is reflected through the energy bar or a color depth; the greater the pressure level, the deeper a color of the energy bar or the more the number of the energy bars. As for the auditory feedback, a speaker may be set to feedback different sound effect information according to the pressure level, and an intensity of sound effect information is positively related to the pressure level; the greater the pressure level, the stronger a sound effect intensity, the longer a length or the more the number of times of speaker feedback.

The mobile terminal may determine a matching result of the fingerprint detecting device to a user fingerprint before performing a feedback, if it matches, the feedback is performed, and otherwise the feedback is not performed.

On the basis of Embodiment 1, Embodiment 2 of the present invention provides a user with a pressing experience similar to a mechanical key, thereby enhancing the user experience.

### Embodiment 3

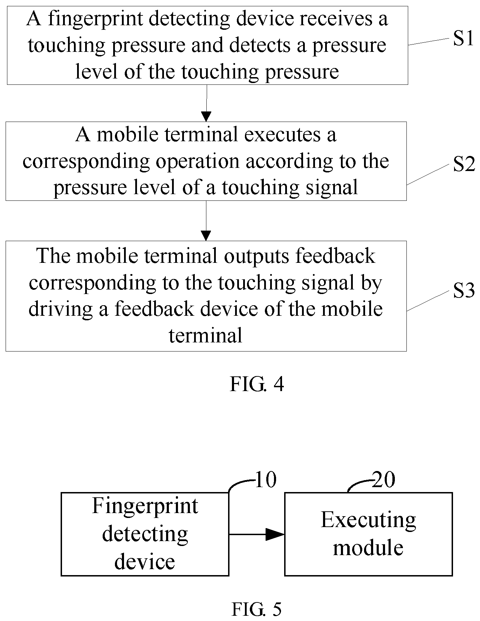

Embodiment 3 of the present invention provides a system for implementing an operation of a mobile terminal according to a touching signal, as shown in FIG. 5, the system including:
a fingerprint detecting device 10, configured to receive a touching signal and detect a pressure level of the touching signal; and
an executing module 20, configured to execute a corresponding operation according to the pressure level of the touching signal.

The fingerprint detecting device 10 receives the touching signal through a built-in or an external pressure detecting device such as a capacitive sensor, an optical sensor and/or pressure-sensitive element; the pressure detecting device such as the optical sensor or the pressure-sensitive element may be electrically connected to the fingerprint detecting device 10 or merely be arranged on a periphery area of the fingerprint detecting device 10. A user only needs to press a finger against an area of the fingerprint detecting device 10 to send a touching signal, and the fingerprint detecting device 10 may obtain said touching signal.

The fingerprint detecting device 10 further detects the pressure level of the touching signal. In a capacitive touching detecting manner, a touching pressure may be detected according to a change of a finger pressing area; in an optical touching detecting manner, the touching pressure may be detected according to a change of a light absorption intensity by a hand, and a pressure detecting method of the pressure-sensitive element type detects a change of the touching pressure according to a change of a resistance value of the sensitive element when the hand touches a key. In addition, the change of the touching pressure may also be determined according to a change of a fingerprint image.

Takes detecting the touching pressure by the fingerprint detecting device 10 per se as an example, since the touching pressure of a body part (such as the finger) is different, and a contact degree between the body part and the fingerprint detecting device 10 is different, and accordingly collected fingerprint data would change. A main manifestation is that: when the touching pressure of the body part increases, texture ridges (such as fingerprint ridges) are close to each other by squeezing deformation, and the greater the touching pressure, the more the deformation. Therefore, the fingerprint detecting device 10 may collect information data of a fingerprint texture of a touched body part through a plurality of sensing units, and then calculate a ridge deformation degree of the fingerprint texture of the body part according to collected texture information data, and quantify the touching pressure of the body part according to the ridge deformation degree (the ridge deformation degree is positively related to the touching pressure). The fingerprint detecting device may also detect the pressure level of the touching signal through a contact area between the finger and the fingerprint detecting device (the greater the touching pressure, the larger the contact area between the finger and the fingerprint detecting device) and fingerprint data outputted from the fingerprint detecting device (the greater the touching pressure, the greater the amount of the data outputted through fingerprint detection).

When the fingerprint detecting device 10 detects the touching pressure through a built-in or the external optical sensor, the fingerprint detecting device 10 receives a reflected light reflected from blood in the body part, converts a reflected light signal into an electrical signal, performs an analysis processing on the electrical signal, and quantifies the touching pressure generated by the body part according to an intensity of the electrical signal (the touching pressure is positively related to the intensity of the reflected light).

Before the executing module 20 executes a corresponding operation according to the pressure level of the touching signal, the executing module 20 presets the pressure levels of the touching signals, so as to distinguish a process of from a non-touching to a gently pressing then to a heavily pressing by the finger. For example, the pressure level of the touching signal is divided into three levels: level 0: when the finger initially contacts with the area of the fingerprint detecting device, pressure of a detected touching signal is less than or equal to a preset first threshold value; level 1: when the finger maintains touching, the pressure of the touching signal is greater than the first threshold value, and less than or equal to a preset second threshold; and level 2: when the finger heavily presses the area of the fingerprint detecting device, the pressure of the touching signal is greater than the second threshold value. Next, the executing module 20 sets operations corresponding to different pressure levels of the touching signal, and performs different operations according to a change of pressing by the finger from the gently pressing to the heavily pressing. Many kinds of corresponding operations can be set, such as a unlocking operation, a wake-up operation and/or a menu selection operation, etc.. For example, when the pressure level of the touching signal is 0, the mobile terminal does not perform any operation; when the pressure level of the touching signal is 1, the corresponding operation is waking up the mobile terminal; when the pressure level of the touching signal is 2, a fingerprint matching operation and a fingerprint unlocking operation are performed, or a menu selection operation is directly performed. The operations of the mobile terminal such as controlling of a game, zooming of a map, controlling of a player volume may also be set as the operations corresponding to the different pressure levels of the touching signal.

As shown in FIG. 3, taking a corresponding operation as the menu selection as an example, when the pressure level is 0, it is determined that the finger leaves, the mobile terminal does not perform any operation; when the pressure level is 1, a shortcut menu is popped up; when the pressure level changes between 1 and 2 (that is, when the finger changes between the gently pressing and the heavily pressing), an application is selected; the pressure level 2: the selected application is responded after selecting the application.

The fingerprint detecting device 10 of Embodiment 3 of the present invention receives the touching signal through the built-in or the peripheral device and detects the touching pressure, the user only needs to place his or her finger on the area of the fingerprint detecting device 10, so that the detecting manner may be diversified. Further, the executing module 20 performs different operations of the mobile terminal according to the different pressure levels of the touching signal, and comparing with the prior art which merely senses a touching, the present invention distinguishes a touching intensity of the human body, enriches functions of a touching key, and improves the user experience.

### Embodiment 4

On the basis of Embodiment 3, in Embodiment 4 of the present invention, the executing module 20 is also configured to:
output feedback corresponding to the touching signal by driving a feedback device 30 of the mobile terminal.

The executing module 20 presets a feedback manner corresponding to the different pressure levels of the touching signal. The feedback manner may be a tactile feedback, an auditory feedback and/or a visual feedback. The tactile feedback may be performed by driving a motor to vibrate, the auditory feedback may be performed by driving a speaker to generate a preset prompt tone through a speaker, and the visual feedback may be performed by driving a display device to display a preset picture or image through a display. Takes the motor vibration as an example, when the pressure level of the touching signal changes from level 0 to level 1: a system detects a touching of the finger, but does not respond a key pressing action, and the motor does not vibrate; level 1 to level 2: the system responds the key pressing action and controls a tactile feedback motor generating vibration feedback; and level 2: the system responds the key pressing and drives the motor to generate a feedback vibration according to the pressure, and the vibration continues for a preset time. The foregoing tactile feedback intensity is positively related to the pressure level of the touching signal, and the feedback intensity may be a separate setting of amplitude, frequency or duration of a feedback signal, or a combination setting. As for the tactile feedback, the pressure level may be reflected through a vibration intensity of a vibration motor, and the greater the pressure level, the larger a vibration amplitude, the higher a vibration frequency or the longer a vibration duration. As for the visual feedback, different feedback interfaces may be displayed through the display according to the pressure level, the feedback intensity of the display is positively related to the pressure level, such as the pressure level is positively related to a screen background brightness or a background color saturation; the greater the pressure level, the brighter the background or the deeper the color of the screen background. When the pressure level reaches a certain threshold, the screen prompts by a dynamic water ripple, and the greater the pressure level, the larger a dynamic water ripple or the more the number of turns thereof. A pressure energy bar may also be displayed on the screen when the pressure level reaches a certain threshold, and the pressure is reflected through the energy bar or a color depth; the greater the pressure level, the deeper a color of the energy bar or the more the number of the energy bars. As for the auditory feedback, the speaker may be set to feedback different sound effect information according to the pressure level, and an intensity of sound effect information is positively related to the pressure level; the greater the pressure level, the stronger a sound effect intensity, the longer a length or the more the number of times of speaker feedback.

The executing module 20 may determine a matching result of the fingerprint detecting device to a user fingerprint before performing a feedback, if it matches, the feedback is performed, and otherwise the feedback is not performed.

On the basis of Embodiment 3, Embodiment 4 of the present invention provides a user with a pressing experience similar to a mechanical key, thereby enhancing the user's experience.

### Embodiment 5

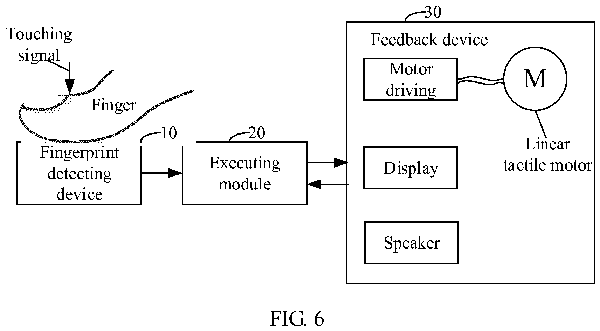

Embodiment 5 of the present invention provides a mobile terminal, including a system for implementing an operation of the mobile terminal according to a touching signal, a structure and a working principle of said system are similar to the system of FIGS. 5 and 6, and will not be described redundantly herein.

Through the description of the foregoing embodiments of the invention, a person of ordinary skill in the art would clearly understand that the foregoing embodiments can be achieved by software together with the necessary general-purpose hardware platform, and certainly can also be achieved only by hardware, but the former would be preferred in many cases. Based on this understanding, the technical solution of the present invention naturally or the portion by which the invention contributes to the prior art can be implemented in the form of software products, and the software products can be stored in storage media(such as ROM/RAM, hard disks, compact disks), and include several instructions for instructing a terminal device (may be a mobile phone, a server, an air conditioner or a network device or the like) to perform the method in the embodiments of the present invention.

The foregoing descriptions are merely preferred embodiments of the present invention, rather than limiting the patent scope of the present invention, any equivalent structures or equivalent flow variations made by utilizing the description and accompanying drawings of the present invention, or direct or indirect applications in other related technical fields, are all encompassed in the protection scope of the present invention.

## Claims

1. A method for implementing an operation of a mobile terminal according to a touching signal, comprising:
receiving, by a fingerprint detecting device of the mobile terminal, a touching signal, and detecting a pressure level of the touching signal; and
executing, by the mobile terminal, a corresponding operation according to the pressure level of the touching signal.

2. The method according to claim 1, wherein the detecting a pressure level of the touching signal comprises:
detecting, by the fingerprint detecting device, the pressure level of the touching signal through a built-in or an external pressure detecting device, wherein the pressure detecting device comprises a capacitive sensor, an optical sensor, and/or a pressure-sensitive element.

3. The method according to claim 1, wherein the detecting a pressure level of the touching signal comprises:
detecting, by the fingerprint detecting device, the pressure level of the touching signal through fingerprint data outputted from the fingerprint detecting device.

4. The method according to claim 1, wherein the corresponding operation comprises a mobile terminal unlocking operation, a fingerprint scanning operation, a fingerprint matching operation, a wake-up operation and/or a menu selection operation.

5. The method according to claim 1, further comprising:
simultaneously with, before, or after the executing a corresponding operation by the mobile terminal according to the pressure level of the touching signal, outputting feedback corresponding to the touching signal by driving a feedback device of the mobile terminal.

6. The method according to claim 5, wherein the feedback corresponding to the touching signal comprises tactile feedback, auditory feedback and/or visual feedback of the mobile terminal.

7. The method according to claim 6, wherein the tactile feedback comprises a motor vibration.

8. The method according to claim 5, wherein a feedback intensity of the feedback corresponding to the touching signal is positively related to the pressure level of the touching signal.

9. A system for implementing an operation of a mobile terminal according to a touching signal, comprising:
a fingerprint detecting device, configured to receive a touching signal and detect a pressure level of the touching signal; and
an executing module, configured to execute a corresponding operation according to the pressure level of the touching signal.

10. The system according to claim 9, wherein the fingerprint detecting device is further configured to detect the pressure level of the touching signal through a built-in or an external pressure detecting device, and the pressure detecting device comprises a capacitive sensor, an optical sensor, and/or a pressure-sensitive element.

11. The method according to claim 9, wherein the fingerprint detecting device is further configured to detect the pressure level of the touching signal through fingerprint data outputted from the fingerprint detecting device.

12. The system according to claim 9, wherein the corresponding operation comprises a mobile terminal unlocking operation, a fingerprint scanning operation, a fingerprint matching operation, a wake-up operation and/or a menu selection operation.

13. The system according to claim 9, wherein the executing module is further configured to:
output feedback corresponding to the touching signal by driving a feedback device of the mobile terminal.

14. The system according to claim 13, wherein the feedback corresponding to the touching signal comprises tactile feedback, auditory feedback and/or visual feedback of the mobile terminal.

15. The system according to claim 14, wherein the tactile feedback comprises a motor vibration.

16. The system according to claim 13, wherein a feedback intensity of the feedback corresponding to the touching signal is positively related to the pressure level of the touching signal.

17. A mobile terminal, comprising the system for implementing an operation of a mobile terminal according to any one of claims 9-16.
